# EUROPÄISCHE PATENTANMELDUNG

(11) **EP 3 242 077 A1**
(43) Veröffentlichungstag der Anmeldung: **08.11.2017**
(21) Anmeldenummer: 17167898.0
(22) Anmeldetag: 25.04.2017
(51) Int. Cl.: F21S 10/00, F21V 21/35, F21S 4/20

(54) **FESTLEGEPROFIL**

(30) Priorität: 06.05.2016 DE 202016102425 U
(71) Anmelder: REHAU AG + Co, 95111 Rehau (DE)
(72) Erfinder: Goldstein, Jörg, 95028 Hof (DE); Schmidt, Steven, 95182 Döhlau (DE); Eibl, Stefan, 95028 Hof (DE); Michels, Peter, 95028 Hof (DE)

(57) **Zusammenfassung**

Die Erfindung betrifft ein Festlegeprofil (1) für die Festlegung eines Lichtabstrahlkörpers (14), das eine Basis (6) aufweist, an der wenigstens ein elektrisches lichterzeugendes Element (9) angeordnet ist, und an der an einer ersten Seite (7) ein Halteabschnitt (2) und an einer zweiten Seite (8), die der ersten Seite (7) gegenüberliegt, ein Festlegeabschnitt (4) angeordnet ist, wobei der Halteabschnitt (2), der zwei etwa parallele von der Basis (6) etwa senkrecht wegstehende Schenkel (3) aufweist, zur Aufnahme eines Abschnitts (15) Lichtabstrahlkörpers (14) vorgesehen ist, und der Festlegeabschnitt (4) ein Festlegeelement (5) aufweist, da sich dadurch auszeichnet, dass an zumindest einer Stelle (11) des Festlegeabschnitts (4) des Festlegprofils (1) eine elektrische Kontaktierung (10) ausgebildet ist, die eine elektrisch leitende Verbindung (12) zum elektrischen lichterzeugenden Element (9) herstellt.

## Beschreibung

Die Erfindung betrifft ein Festlegeprofil zur Festlegung eines Lichtabstrahlkörpers.

Lichtabstrahlkörper, wie beispielsweise sog. Lichtleiterplatten finden Einsatz bei Flächenleuchten. Bei solchen Flächenleuchten ist der Lichtabstrahlkörper allseitig von einer Rahmenanordnung umgeben, die diesen hält. Dadurch ist der Einsatz von solchen Flächenleuchten begrenzt. Auch ist die Kontaktierung der lichterzeugenden Elemente aufwendig, um diese mit Strom zu versorgen.

Aufgabe der vorliegenden Erfindung ist es daher, ein Festlegeprofil zur Festlegung eines Lichtabstrahlkörpers zur Verfügung zu stellen, welches im Vergleich zu den bekannten Rahmenanordnungen aus dem Stand der Technik weiterentwickelt und verbessert ist.

Die Lösung der geschilderten Aufgabe gelingt mit den Merkmalen des Anspruchs 1.

Überraschenderweise wurde gefunden, dass ein Festlegeprofil für die Festlegung eines Lichtabstrahlkörpers, das eine Basis aufweist, an der wenigstens ein elektrisches lichterzeugendes Element angeordnet ist, und an der an einer ersten Seite ein Halteabschnitt und an einer zweiten Seite, die der ersten Seite gegenüberliegt, ein Festlegeabschnitt angeordnet ist, wobei der Halteabschnitt, der zwei etwa parallele von der Basis etwa senkrecht wegstehende Schenkel aufweist, zur Aufnahme eines Abschnitts des Lichtabstrahlkörpers vorgesehen ist, und der Festlegeabschnitt ein Festlegeelement aufweist, die gestellte Aufgabe vollumfänglich erfüllt, wenn vorgesehen ist, dass an zumindest einer Stelle des Festlegeabschnitts des Festlegeprofils eine elektrische Kontaktierung ausgebildet ist, die eine elektrisch leitende Verbindung zum elektrischen lichterzeugenden Element herstellt.

Ein solches erfindungsgemäßes Festlegeprofil überwindet die Nachteile des Standes der Technik und löst die gestellte Aufgabe.

Das erfindungsgemäße Festlegeprofil ist dabei derartig ausgestaltet, dass eine Basis vorgesehen ist, an der ein elektrisches lichterzeugendes Element angeordnet ist. Das elektrische lichterzeugende Element ist insbesondere eine Leuchtdiode, wobei ein Leuchtdiodenband, auf dem eine Vielzahl von Leuchtdioden angeordnet sind, bevorzug ist.

In einer sehr vorteilhaften Ausgestaltung der vorliegenden Erfindung kann vorgesehen sein, dass eine Vielzahl von Leuchtdioden und / oder das Leuchtdiodenband entlang der gesamten Länge des Festlegeprofils angeordnet ist.
Hierdurch wird erreicht, dass entlang der gesamten Länge des Festlegeprofils Licht aus der Vielzahl von Leuchtdioden und / oder den Leuchtdioden des Leuchtdiodenbandes zur Verfügung steht, das in den vom Festlegeprofil aufnehmbaren Lichtabstrahlkörper einstrahlbar ist.

Es hat sich im Rahmen der vorliegenden Erfindung bewährt, wenn vorgesehen ist, dass das Leuchtdiodenband mit einem Haftmittel an der Basis des Festlegeprofils festgelegt ist. Bei einem solchen Haftmittel kann es sich beispielsweise um einen Klebstoff oder um ein Material handeln, welches adhäsiv zwischen dem Leuchtdiodenband und der Basis des Festlegeprofils wirkt.
Es ist dadurch ganz besonders einfach, das Leuchtdiodenband an der Basis des Festlegeprofils festzulegen, was den Arbeitsaufwand für die Herstellung eines solchen Festlegeprofils erleichtert und die Kosten zu dessen Herstellung senkt.

Die Basis des Festlegeprofils weist eine erste Seite auf und eine zweite Seite, die der ersten Seite gegenüberliegt.
In einer bevorzugten Ausgestaltung des erfindungsgemäßen Festlegeprofils sind die erste Seite und die zweite Seite etwa parallel zueinander angeordnet.

An der ersten Seite der Basis des Festlegeprofils ist ein Halteabschnitt angeordnet. Der Halteabschnitt an der Basis des Festlegeprofils weist zwei etwa parallele von der Basis etwa senkrecht wegstehende Schenkel auf. Durch das Vorsehen dieser zwei Schenkel kann der Halteabschnitt einen Abschnitt des Lichtabstrahlkörpers aufnehmen.

Die Aufnahme eines Abschnitts des Lichtabstrahlkörpers vom Halteabschnitt an der Basis des Festlegeprofils kann dabei beispielsweise klemmend erfolgen, indem im Verbindungszustand des Halteabschnitts mit einem Abschnitt des Lichtabstrahlkörpers eine kraftschlüssige Verbindung durch Anlage der Schenkel auf die Oberfläche des Abschnitts des Lichtabstrahlkörpers hergestellt ist.

In einer anderen Ausführungsform der vorliegenden Erfindung kann vorgesehen sein, dass der Abschnitt des Lichtabstrahlkörpers vom Halteabschnitt beispielsweise unter Zuhilfenahme eines Klebemittels aufgenommen ist.

In einer anderen Ausführungsart der Erfindung kann vorgesehen sein, dass eine Schweißung zur Festlegung des Abschnitts des Lichtabstrahlkörpers am Halteabschnitt erfolgt.

Es ist auch möglich, dass am Abschnitt des Lichtabstrahlkörpers Haltestrukturen ausgebildet sind, die mit entsprechenden komplementären Haltestrukturen an den Schenkeln des Halteabschnitts kraftschlüssig zusammenwirken und so der Lichtabstrahlkörper vom Halteabschnitt festgelegt ist.

In einer bevorzugten Ausführungsform der vorliegenden Erfindung kann vorgesehen sein, dass an den Schenkeln des Halteabschnitts des Festlegeprofils ein Reflektor angeordnet ist. Ein solcher Reflektor kann bewirken, dass Licht, das aus dem Lichtabstrahlkörper austritt vom Festlegeprofil weg beispielsweise in den zu beleuchtenden Raum reflektiert wird. In einer ganz besonders bevorzugten Ausführungsform der Erfindung kann an jedem Schenkel des Halteabschnitts des Festlegeprofils ein Reflektor vorgesehen sein und so eine besonders intensive Reflexion des Lichts stattfinden.

Das aus dem Lichtabstrahlkörper ausgekoppelte Licht kann durch die Form des Reflektors gerichtet werden. Dies kann durch die Form des Abstrahlkörpers weiter unterstützt werden.

In einer bevorzugten Ausführungsform der Erfindung kann die Festlegung des Lichtabstrahlkörpers am Halteabschnitt derartig ausgebildet sein, dass das Festlegeprofil das Gewicht des Lichtabstrahlkörpers aufnehmen und tragen kann.

An der zweiten Seite der Basis des Festlegeprofils ist ein Festlegeabschnitt angeordnet. Der Festlegeabschnitt weist ein Festlegeelement auf, um das Festlegeprofil befestigen zu können.

Die Befestigung des Festlegeprofils am Festlegeabschnitt kann an einem hier nicht näher beschriebenen Aufnahmemittel erfolgen, wobei im befestigten Zustand des Festlegeprofils am Aufnahmemittel beispielsweise das Festlegeelement am Festlegeabschnitt mit einem komplementär ausgeformten Abschnitt des Aufnahmemittels kraftschlüssig zusammenwirkt.

Es hat sich im Rahmen der vorliegenden Erfindung als vorteilhaft herausgestellt, wenn vorgesehen ist, dass das Festlegeelement als Fuß, insbesondere als Rastfuß ausgebildet ist. Es ist mithilfe eines Fußes, insbesondere eines Rastfußes, besonders einfach möglich, das Festlegeprofil zu befestigen.

Ein wesentlicher Aspekt der vorliegenden Erfindung ist der, dass an zumindest einer Stelle des Festlegeabschnitts des Festlegeprofils eine elektrische Kontaktierung ausgebildet ist, die eine elektrisch leitende Verbindung zum elektrischen lichterzeugenden Element herstellt.
Durch diese Maßnahme gelingt es, bei der Befestigung des Festlegeprofils in einfacher Weise einen elektrischen Anschluss an das elektrische lichterzeugende Element herzustellen.

Hierzu ist eine elektrische Kontaktierung an zumindest einer Stelle des Festlegeabschnitts des erfindungsgemäßen Festlegeprofils ausgebildet.

Die elektrische Kontaktierung kann als Kontaktfläche, insbesondere als federnde Kontaktfläche, als Stift, insbesondere als federnd gelagerter Stift oder als Federstift, als Nadel oder als Schraube oder dergleichen ausgebildet sein.
Durch die Ausbildung der elektrischen Kontaktierung gemäß vorstehender Beschreibung kann eine besonders einfache, sichere und kostengünstige Realisierung der Stromzufuhr zum elektrischen lichterzeugenden Element realisiert werden. Es kann auf diese Weise eine elektrische Versorgung des elektrischen lichterzeugenden Elements an der Basis des Festlegeprofils gemäß vorliegender Erfindung ohne großen Aufwand hergestellt werden.

Mit besonderem Vorteil kann bei dem erfindungsgemäßen Festlegeprofil vorgesehen sein, dass Leiterbahnen zur Versorgung des elektrischen lichterzeugenden Elements ausgebildet sind, wobei diese Leiterbahnen in Form von Litzen oder aufgedruckten Leiterbahnen oder aufgedampften Leiterbahnen oder Kupferflachleitern oder Stromschienen Kombinationen der Vorgenannten ausgebildet sind.

Diese Leiterbahnen können zwischen dem elektrischen lichterzeugenden Element und der elektrischen Kontaktierung ausgebildet sein, so dass elektrische Energie von der elektrischen Kontaktierung zu dem elektrischen lichterzeugenden Element transportierbar ist.

Das Festlegeprofil der vorliegenden Erfindung kann ein- oder mehrstückig ausgebildet sein.

Bei einer einstückigen Ausbildung des Festlegeprofils kann dieses in einfacher Weise beispielsweise in einem Extrusionsprozess hergestellt und kostengünstig bereitgestellt werden.

Ist das erfindungsgemäße Festlegeprofil mehrstückig ausgebildet, so kann beispielsweise ein Kontaktierelement vorgesehen sein, das es ermöglicht, je nach der Zusammenbausituation eine besonders einfache Kontaktiertechnik zur Stromversorgung des elektrischen lichterzeugenden Elements zur Verfügung zu stellen.

Durch diese Maßnahme können insbesondere bei der Befestigung des erfindungsgemäßen Festlegeprofils neben der einfachen elektrischen Kontaktierung weitere Freiheitsgrade im Hinblick auf unterschiedliche Befestigungstechniken generiert werden.

Es kann sich im Rahmen der vorliegenden Erfindung als ganz besonders günstig herausstellen, wenn vorgesehen ist, dass das erfindungsgemäße Festlegeprofil in einem Extrusionsverfahren, bevorzugt in einem Coextrusionsverfahren unter Anordnung des Leuchtdiodenbands am Festlegeprofil, hergestellt ist.

Durch diese Maßnahme kann in einem einfachen Fertigungsprozess ein Festlegeprofil in unbegrenzter Länge kostengünstig hergestellt werden, das dann je nach den Notwendigkeiten auf die erforderlichen Längen abschneidbar ist. Durch die Anordnung des Leuchtdiodenbands am Festlegeprofil kann damit dann bereits das einsatzbereite Festlegeprofil zur Verfügung gestellt werden.

Das Festlegeprofil kann auch in einem anderen Formgebungsverfahren, zum Beispiel in einem Spritzgussverfahren oder einem Thermoformverfahren oder einem Blasverfahren oder einer Kombination der vorgenannten Verfahren hergestellt sein.

Alternativ ist es auch möglich, dass das Festlegeprofil unter Verwendung eines generativen Fertigungsverfahrens, insbesondere einstückig, beispielsweise durch ein 3-D-Druckverfahren, hergestellt werden kann.

Hierzu kann mit Vorteil ein datenverarbeitungsmaschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für ein Festlegeprofil.
Hierbei umfasst das Verfahren insbesondere auch die Eingabe von Daten, die ein Festlegeprofil darstellen, in eine Datenverarbeitungsmaschine und die Nutzung der Daten, um ein Festlegeprofil als dreidimensionales Modell darzustellen, wobei das dreidimensionale Modell geeignet ist zur Nutzung bei der Herstellung eines Festlegeprofils.
Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf ein Festlegeprofil abgegeben wird und die reflektierte Energie empfangen wird, und wobei ein virtuelles dreidimensionales Modell eines Festlegeprofils unter Verwendung einer computerunterstützten Design-Software erzeugt wird.

Als ganz besonders günstig kann es sich bei der vorliegenden Erfindung ergeben, wenn vorgesehen ist, dass das erfindungsgemäße Festlegeprofil ein Polymermaterial enthält oder aus einem solchen besteht, wobei das Polymermaterial ein Polyolefin, wie beispielsweise ein Polyethylen oder ein Polypropylen oder ein Polybutylen, oder ein Polyamid oder ein Polystyrol oder ein ABS (Acrylnitril-Butadien-Styrol) oder ein Polyester oder ein Polycarbonat oder ein PVC (Polyvinylchlorid) oder ein PEEK (Polyetheretherketon) oder ein PEI (Polyetherimid) oder ein SAN (Styrol-Acrylnitril-Copolymer) oder ein POM (Polyoxymethylen) oder ein ASA (Acrylnitril-Styrol-Acrylester-Copolymer) oder ein Blend oder eine Mischung oder ein Copolymeres der Vorgenannten ist.
Durch die Verwendung eines Polymermaterials, insbesondere eines der vorgenannten Polymermaterialien, kann ein Festlegeprofil gemäß vorliegender Erfindung in kostengünstiger Weise bereitgestellt werden.

Die aufgeführten Polymermaterialien sind langlebig, inert, einfach formbar, temperaturstabil und leicht verfügbar.

Die Polymermaterialien können mit einfachen Techniken eingefärbt werden, an ihrer Oberfläche vielfältig gestaltet und insbesondere dort auch dekoriert werden. Solche Festlegeprofile sind damit auch gestalterischen Maßnahmen einfach zugänglich.

Das Festlegeprofil der vorliegenden Erfindung ist dafür vorgesehen, dass vom Halteabschnitt ein Abschnitt eines Lichtabstrahlkörpers aufgenommen ist.

Der Abschnitt eines Lichtabstrahlkörpers ist bevorzugt ein Randabschnitt des Lichtabstrahlkörpers. Der Randabschnitt kann beispielsweise eine Breite von 5 mm bis 25 mm, bevorzugt von 10 mm bis 15 mm aufweisen.

Der Lichtabstrahlkörper selber kann in bevorzugter Weise als Streuscheibe ausgebildet sein, die eine quadratische oder rechteckige Form aufweist. Auch andere Formen sind möglich, insbesondere solche, bei denen gekrümmte Abschnitte vorliegen.

Zumindest ein Abschnitt einer Seite des Lichtabstrahlkörpers ist gemäß vorliegender Erfindung vom Halteabschnitt des Festlegeprofils aufgenommen. Bei entsprechender elektrischer Kontaktierung und Stromversorgung des elektrischen lichterzeugenden Elements kann dabei Licht in den Lichtabstrahlkörper eingestrahlt werden, der dieses Licht dann je nach der Ausbildung des Lichtabstrahlkörpers an die Umgebung abgibt.

In einer günstigen Ausgestaltung der vorliegenden Erfindung kann vorgesehen sein, dass das elektrische lichterzeugende Element am Lichtabstrahlkörper anliegt und so eine besonders effektive Einkopplung von Licht aus dem elektrischen lichterzeugenden Element in den Lichtabstrahlkörper stattfindet.

Das elektrische lichterzeugende Element kann vorteilhaft auch zumindest abschnittsweise mit Hilfe eines Polymermaterials an dem Lichtabstrahlkörper angebunden sein, um auf diese Weise effektiv Licht in diesen einzukoppeln.
Hierzu kann insbesondere ein Silikonkautschuk, ein Thermoplastisches Polyurethan (TPU) oder ein Thermoplastisches Elastomer auf Styrolbasis (TPES, SEBS), das auch MAHmodifiziert (Maleinsäureanhydrid-modifiziert) sein kann, eingesetzt werden.

Auf diese Weise kann eine transparente Verbindungsschicht zwischen dem elektrischen lichterzeugenden Element und dem Lichtabstrahlkörper geschaffen werden.

In einer sehr vorteilhaften Fortbildung der vorliegenden Erfindung kann vorgesehen sein, dass zwischen dem elektrischen lichterzeugenden Element und dem Lichtabstrahlkörper eine farbige Folie und / oder eine farbige Schicht aus Polymermaterial und / oder ein Farbfilter und / oder farbige Lackschicht und / oder eine farbige Kleberschicht und / oder eine Lumineszenzkonverterschicht angeordnet ist.
Auf diese Weise kann beispielsweise weißes Licht von dem elektrischen lichterzeugenden Element ausgesendet werden, welches dann in farbiges Licht umgewandelt wird und vom Lichtabstrahlkörper in den Raum ausgesendet wird.

Als ganz besonders vorteilhaft kann es sich bei der vorliegenden Erfindung ergeben, wenn vorgesehen ist, dass das erfindungsgemäße Festlegeprofil eine Metallfolie oder ein Metallband oder eine Metallbeschichtung, die beispielsweise in einem Abscheideverfahren aufgebracht ist, aufweist.

Durch diese Maßnahme kann die mechanische Stabilität des Festlegeprofils erhöht werden, so dass dieses unter Einwirkung einer Kraft nicht oder nur wenig zur Durchbiegung neigt. Auch die Längenausdehnung des Festlegeprofils bei Temperaturänderungen kann so reduziert werden.
Schließlich kann so auch ein gegebenenfalls stattfindender unerwünschter Lichtdurchtritt durch das Polymermaterial des Festlegeprofils vermindert oder unterbunden werden.
Eine Metallfolie oder ein Metallband an der Außenseite des Festlegeprofils kann im Sichtbereich des Festlegeprofils vorteilhaft als Dekorationselement genutzt werden.

Die Metallfolie oder das Metallband kann in der Matrix des Polymermaterials des Festlegeprofils angeordnet sein, oder an einem Oberflächenabschnitt des Festlegeprofils.

Es kann auch vorgesehen sein, dass das Festlegeprofil Verstärkungselemente aufweist, die Metallfasern und / oder Metallwhisker und / oder Keramikfasern und / oder Keramikwhisker und / oder Glasfasern und / oder Polymerfasern, wobei es sich um Lang- und / oder Kurzfasern handeln kann, enthalten.
Auch bandförmige Verstärkungselemente sind möglich.

Das Festlegeprofil der vorliegenden Erfindung kann auch zu einer Rahmenkonstruktion zusammengefügt werden und einen Lichtabstrahlkörper aufnehmen.
Eine solche Rahmenkonstruktion kann beispielsweise aus vier gleich langen Stücken des Festlegeprofils bestehen, die an ihren Enden verbunden sind, so dass eine quadratische Rahmenkonstruktion vorliegt. In einer anderen Ausführungsart kann auch vorgesehen sein, dass zwei Stücke mit einer ersten Länge und zwei Stück mit einer zweiten Länge zu einer rechteckigen Rahmenkonstruktion verbunden sind.
Es lassen sich so auch Rahmenkonstruktionen herstellen, die dreieckig, fünfeckig oder mehreckig ausgebildet sind. Auch gekrümmte Stücke des Festlegeprofils lassen sich verarbeiten, so dass Rahmenkonstruktionen gebildet werden können, die beispielsweise Kreisabschnitte oder Kurvenabschnitte aufweisen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert.

Hierzu zeigen:
- Fig.1: eine schematische Querschnittsansicht eines Festlegeprofils;
- Fig. 2a: eine schematische Querschnittsansicht eines Festlegeprofils in einer ersten Ausführungsform;
- Fig. 2b: eine Detailvergrößerung des Festlegeprofils aus Fig. 2a;
- Fig. 3a: eine schematische Querschnittsansicht eines Festlegeprofils in einer zweiten Ausführungsform;
- Fig. 3b: eine Detailvergrößerung des Festlegeprofils aus Fig. 3a;
- Fig. 4: eine schematische teilweise geschnittene perspektivische Ansicht eines Festlegeprofils;
- Fig. 5: eine schematische teilweise geschnittene seitliche Ansicht eines Festlegeprofils;
- Fig. 6a: eine schematische Querschnittsansicht eines Kontaktierelements;
- Fig. 6b: eine schematische Querschnittsansicht eines Festlegeprofils in einer dritten Ausführungsform;
- Fig. 7: eine schematische Querschnittsansicht eines Festlegeprofils mit einem festgelegten Lichtabstrahlkörper in einer ersten Ausführung;
- Fig. 8: eine schematische Querschnittsansicht eines Festlegeprofils mit einem festgelegten Lichtabstrahlkörper in einer zweiten Ausführung.

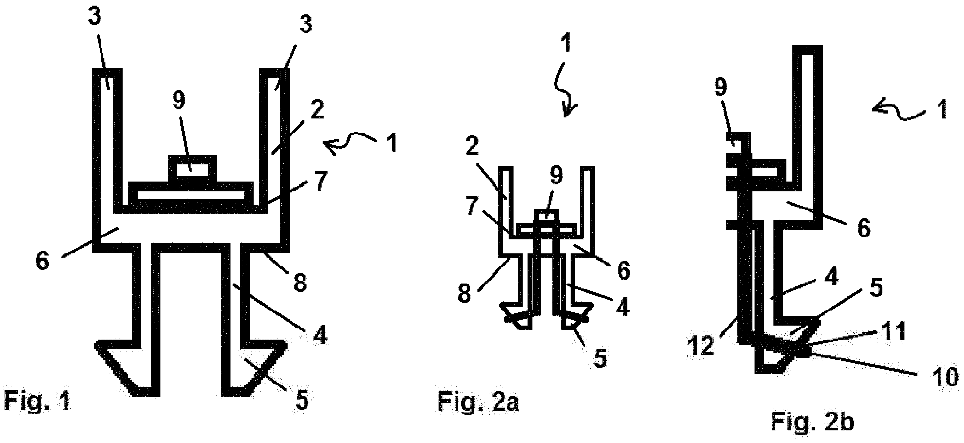

In Fig. 1 ist in einer schematischen Querschnittsansicht ein Festlegeprofil 1 gezeigt. Das Festlegeprofil 1 weist eine Basis 6 auf mit einer ersten Seite 7 und einer zweiten Seite 8. Die erste Seite 7 und die zweite Seite 8 der Basis 6 des Festlegeprofils 1 liegen sich gegenüber. In einer besonderen Ausführungsform des Festlegeprofils 1, die hier gezeigt ist, sind die erste Seite 7 und die zweite Seite 8 der Basis 6 des Festlegeprofils 1 parallel zueinander ausgebildet.
An der ersten Seite 7 der Basis 6 des Festlegeprofils 1 ist ein elektrisches lichterzeugendes Element 9 angeordnet. Das elektrische lichterzeugende Element 9 kann eine Leuchtdiode sein, wobei ein Leuchtdiodenband 13 bevorzugt ist.
An der ersten Seite 7 der Basis 6 des Festlegeprofils 1 ist ein Halteabschnitt 2 ausgebildet. Der Halteabschnitt 2 weist zwei etwa senkrecht von der ersten Seite 7 wegstehende Schenkel 3 auf. Die Schenkel 3 sind zueinander etwa parallel angeordnet und weisen etwa die gleiche Länge auf. Der Halteabschnitt 2 ist dafür vorgesehen, einen hier nicht gezeigten Lichtabstrahlkörper 14 festzulegen.

An der zweiten Seite 8 der Basis 6 des Festlegeprofils 1 ist ein Festlegeabschnitt 4 ausgebildet. Der Festlegeabschnitt 4 weist ein Festlegeelement 5 auf, das vorliegend in Form eines Rastfußes ausgebildet ist. Beim Festlegeprofil 1 gemäß Fig. 1 sind zwei Festlegeelemente 5 als Rastfüße ausgebildet.
Der Festlegeabschnitt 4 an der Basis 6 des Festlegeprofils 1 dient dazu, das Festlegeprofil 1 zu befestigen.

In Fig. 2a ist in einer schematischen Querschnittsansicht ein Festlegeprofil 1 in einer ersten Ausführungsform gezeigt.
Die Bezugszeichen in Fig. 2a entsprechen denen aus Fig. 1.
Gezeigt ist in Fig. 2a in schematischer Weise, dass eine elektrische Kontaktierung und stromleitende Verbindungen vorgesehen sind, um das elektrische lichterzeugende Element 9 mit Strom zu versorgen.

In Fig. 2b ist in einer Detailvergrößerung das Festlegeprofil 1 aus Fig. 2a dargestellt.
Die Bezugszeichen in Fig. 2b entsprechen denen aus Fig. 2a und aus Fig. 1.
In Fig. 2b ist im Detail gezeigt, dass eine elektrisch leitende Verbindung 12 ausgebildet ist, die von einer Stelle 11, an der eine elektrische Kontaktierung 10 am Festlegeabschnitt 4 ausgebildet ist, zum elektrisch lichterzeugenden Element 9 vorliegt.
Die elektrische Kontaktierung 10 ist dabei am Festlegeelement 5 in Form eines Rastfußes des Festlegeabschnitts 4 angeordnet. Es ist damit möglich, elektrische Energie an der elektrischen Kontaktierung 10 einzuspeisen und diese zum elektrischen lichterzeugenden Element 9 zu leiten, um dieses zum Leuchten anzuregen.

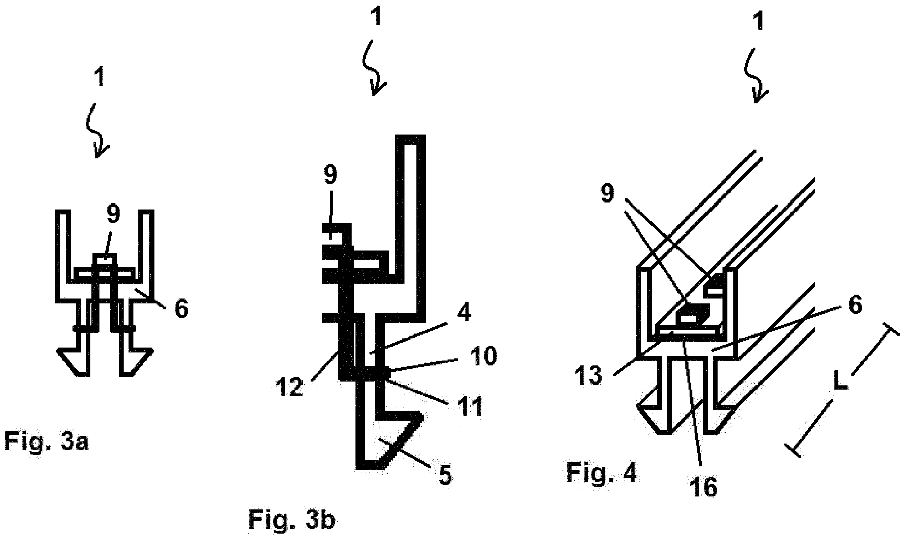

In Fig. 3a ist in einer schematischen Querschnittsansicht ein Festlegeprofil 1 in einer zweiten Ausführungsform dargestellt.
Die Bezugszeichen in Fig. 3a entsprechen denen aus den vorangehenden Figuren. Gezeigt ist in Fig. 3a in schematischer Weise, dass eine elektrische Kontaktierung und stromleitende Verbindungen vorgesehen sind, um das elektrische lichterzeugende Element 9 mit Strom zu versorgen.

In Fig. 3b ist eine Detailvergrößerung des Festlegeprofils 1 aus Fig. 3a gezeigt.
Die Bezugszeichen in Fig. 3b entsprechen denen aus den vorangehenden Figuren.
Um das elektrische lichterzeugende Element 9 mit Strom zu versorgen, ist eine elektrisch leitende Verbindung 12 ausgebildet. Diese steht in Verbindung mit einer elektrischen Kontaktierung 10, die an einer Stelle 11 des Festlegeabschnitts 4 angeordnet ist. Es ist damit möglich, elektrische Energie an der elektrischen Kontaktierung 10 einzuspeisen und diese mithilfe der elektrisch leitenden Verbindung 12 dem elektrischen lichterzeugenden Element 9 zuzuleiten und dieses zum Leuchten anzuregen.

In Fig. 4 ist eine schematische teilweise geschnittene perspektivische Ansicht eines Festlegeprofils 1 gezeigt.
Die Bezugszeichen in Fig. 4 entsprechen denen aus den vorangehenden Figuren.
Bei dieser Ansicht des Festlegeprofils 1 ist das Leuchtdiodenband 13, das an der Basis 6 des Festlegeprofils 1 festgelegt ist, dargestellt.
Auf dem Leuchtdiodenband 13 sind eine Vielzahl von elektrischen lichterzeugenden Elementen 9, insbesondere Leuchtdioden angeordnet. Das Leuchtdiodenband 13 ist an der Basis 6 des Festlegeprofils 1 mithilfe eines Haftmittels 16, beispielsweise eines Klebstoffs, festgelegt.
Das Leuchtdiodenband 13 ist über die gesamte Länge L des Festlegeprofils 1, die in der Fig. 4 lediglich schematisch angegeben ist, ausgebildet.

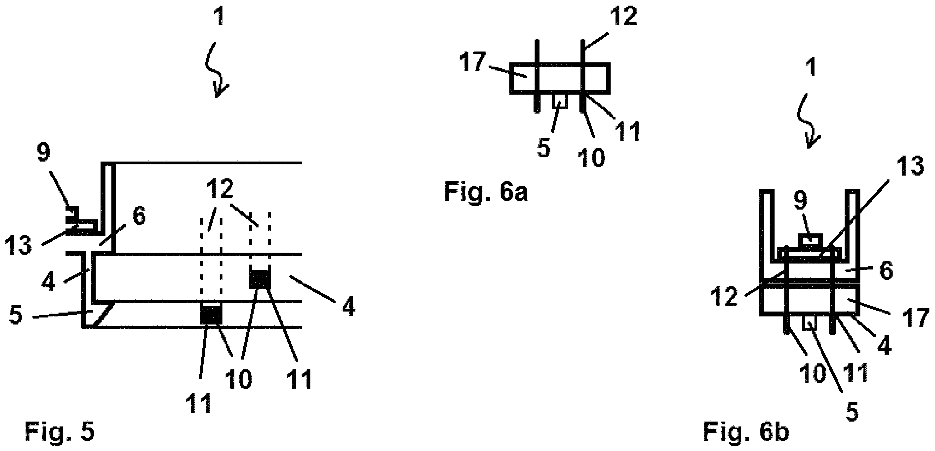

In Fig. 5 ist eine schematische teilweise geschnittene seitliche Ansicht eines Festlegeprofils 1 gezeigt.
Die Bezugszeichen in Fig. 5 entsprechen denen aus den vorangehenden Figuren.
In schematischer Weise ist in Fig. 5 gezeigt, dass die elektrische Kontaktierung 10 an unterschiedlichen Stellen 11 des Festlegeabschnitts ausgebildet sein kann. Mit Bezug auf die Figuren 2b und 3b ist gezeigt, dass die Stellen 11, an denen die elektrische Kontaktierung 10 ausgebildet ist, beispielsweise im Bereich des Festlegeelements, also des Rastfußes, des Festlegeabschnitts 4 oder an einer anderen Stelle des Festlegeabschnitts 4 ausgebildet sein kann.
Die elektrische Kontaktierung 10 ist dabei mit der gestrichelt gezeigten elektrisch leitenden Verbindung 12 in Kontakt, sodass eine Stromleitung von der elektrischen Kontaktierung 10 zur elektrisch leitenden Verbindung 12 und von dort zum elektrischen lichterzeugenden Element 9, das als Leuchtdiode auf einem Leuchtdiodenband 13, das an der Basis 6 des Festlegeprofils 1 festgelegt ist, erfolgen kann. Auf diese Weise wird das elektrische lichterzeugende Element 9 bei Stromzuführung zum Leuchten angeregt.

In Fig. 6a ist eine schematische Querschnittsansicht eines Kontaktierelements 17 gezeigt. Die Bezugszeichen in Fig. 6a entsprechen denen aus den vorangehenden Figuren.

Das Kontierelement 17 weist zwei gegenüberliegende Seiten auf, wobei an der einen Seite an einer Stelle 11 eine elektrische Kontaktierung 10 ausgebildet ist, die mit einer elektrisch leitenden Verbindung 12 in Kontakt steht. An dieser Seite des Kontaktierelements 17 ist ein Festlegeelement 5 ausgebildet.

In Fig. 6b ist eine schematische Querschnittsansicht eines Festlegeprofils 1 in einer dritten Ausführungsform dargestellt.
Die Bezugszeichen in Fig. 6b entsprechen denen aus den vorangehenden Figuren.
Hierzu ist das in Fig. 6a gezeigte Kontakierelement 17 derartig mit der Basis 6 des Festlegeprofils 1 verbunden, dass die elektrisch leitende Verbindung 12 das Leuchtdiodenband 13, das an der Basis 6 festgelegt ist, kontaktiert, um so elektrische Energie von der elektrischen Kontaktierung 10 an der Stelle 11 des Festlegeabschnitts 5 zum Leuchtdiodenband 13 und zum elektrischen lichterzeugenden Element 9 in Form einer Leuchtdiode zu transportieren.
Mit dem Festlegeelement 5 am Festlegeabschnitt 4 kann das Festlegeprofil 1 befestigt werden.

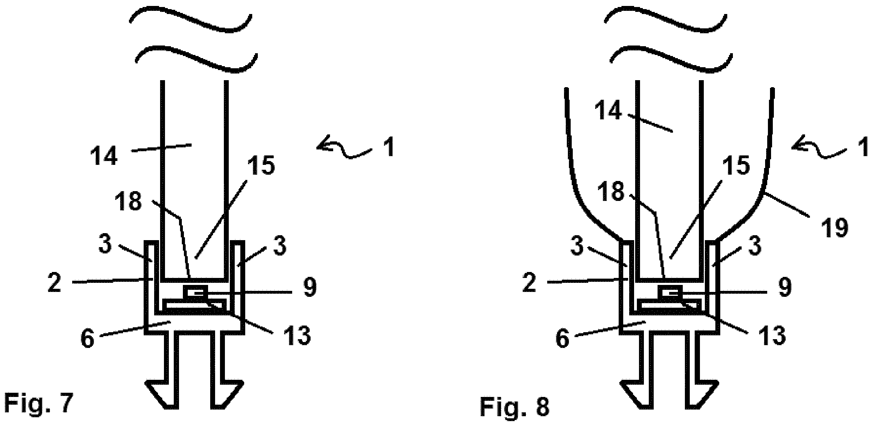

In Fig. 7 ist in einer schematischen Querschnittsansicht ein Festlegeprofil 1 mit einem festgelegten Lichtabstrahlkörper 14 in einer ersten Ausführung gezeigt.
Die Bezugszeichen in Fig. 7 entsprechen denen aus den vorangehenden Figuren.
Das Festlegeprofil 1 hält an seinem Halteabschnitt 2 mithilfe von zwei Schenkeln 3 einen Lichtabstrahlkörper 14 klemmend fest.
Der Lichtabstrahlkörper 14 ist dabei an einem Abschnitt 15 von den Schenkeln 3 des Halteabschnitts 2 des Festlegeprofils 1 klemmend fixiert.
Durch die Stirnfläche 18 des Lichtabstrahlkörpers 14 wird Licht, das das elektrische lichterzeugende Element 9 erzeugt, in den Lichtabstrahlkörper 14 eingestrahlt. Das eingestrahlte Licht verteilt sich im Lichtabstrahlkörper 14 und wird aus dem Lichtabstrahlkörper 14 nach außen abgegeben.

In Fig. 8 ist in einer schematischen Querschnittsansicht ein Festlegeprofil 1 mit einem festgelegten Lichtabstrahlkörper 14 in einer zweiten Ausführung gezeigt.
Die Bezugszeichen in Fig. 8 entsprechen denen aus den vorangehenden Figuren.
Das Festlegeprofil 1 hält an seinem Halteabschnitt 2 mithilfe von zwei Schenkeln 3 einen Lichtabstrahlkörper 14 klemmend fest.

An den Schenkeln 3 des Halteabschnitts 2 des Festlegeprofils 1 ist ein Reflektor 19 angeordnet. Der Reflektor 19 bewirkt, dass Licht, das aus dem Lichtabstrahlkörper 14 austritt, vom Festlegeprofil 1 weg reflektiert wird, wodurch eine gerichtete Lichtabstrahlung ermöglicht wird. In der vorliegenden Ausführungsform ist an jedem Schenkel 3 des Halteabschnitts 2 des Festlegeprofils 1 ein Reflektor 19 vorgesehen.

### Bezugszeichenliste

- 1: Festlegeprofil
- 2: Halteabschnitt
- 3: Schenkel
- 4: Festlegeabschnitt
- 5: Festlegeelement
- 6: Basis
- 7: erste Seite
- 8: zweite Seite
- 9: elektrisches lichterzeugendes Element
- 10: elektrische Kontaktierung
- 11: Stelle
- 12: elektrisch leitende Verbindung
- 13: Leuchtdiodenband
- 14: Lichtabstrahlkörper
- 15: Abschnitt
- 16: Haftmittel
- 17: Kontaktierelement
- 18: Stirnfläche
- 19: Reflektor
- L: Länge

## Patentansprüche

1. Festlegeprofil (1) für die Festlegung eines Lichtabstrahlkörpers (14), das eine Basis (6) aufweist, an der wenigstens ein elektrisches lichterzeugendes Element (9) angeordnet ist, und an der an einer ersten Seite (7) ein Halteabschnitt (2) und an einer zweiten Seite (8), die der ersten Seite (7) gegenüberliegt, ein Festlegeabschnitt (4) angeordnet ist, wobei der Halteabschnitt (2), der zwei etwa parallele von der Basis (6) etwa senkrecht wegstehende Schenkel (3) aufweist, zur Aufnahme eines Abschnitts (15) des Lichtabstrahlkörpers (14) vorgesehen ist, und der Festlegeabschnitt (4) ein Festlegeelement (5) aufweist, **dadurch gekennzeichnet, dass** an zumindest einer Stelle (11) des Festlegeabschnitts (4) des Festlegeprofils (1) eine elektrische Kontaktierung (10) ausgebildet ist, die eine elektrisch leitende Verbindung (12) zum elektrischen lichterzeugenden Element (9) herstellt.

2. Festlegeprofil (1) nach Anspruch 1, **dadurch gekennzeichnet, dass** die elektrische Kontaktierung (10) als Kontaktfläche, insbesondere als federnde Kontaktfläche, als Stift, insbesondere als federnd gelagerter Stift oder als Federstift, als Nadel oder als Schraube ausgebildet ist.

3. Festlegeprofil (1) nach einem der Ansprüche 1 oder 2, **dadurch gekennzeichnet, dass** das Festlegeelement (5) als Fuß, insbesondere als Rastfuß, ausgebildet ist.

4. Festlegeprofil (1) nach einem der vorangehenden Ansprüche, **dadurch gekennzeichnet, dass** das elektrische lichterzeugende Element (9) insbesondere eine Leuchtdiode, bevorzugt ein Leuchtdiodenband (13) ist.

5. Festlegeprofil (1) nach Anspruch 4, **dadurch gekennzeichnet, dass** eine Mehrzahl von elektrischen lichterzeugenden Elementen (9) und / oder das Leuchtdiodenband (13) entlang der gesamten Länge L des Festlegeprofils (1) angeordnet ist.

6. Festlegeprofil (1) nach einem der Ansprüche 4 oder 5, **dadurch gekennzeichnet, dass** das Leuchtdiodenband (13) mit einem Haftmittel (16) an der Basis (6) des Festlegeprofils (1) festgelegt ist.

7. Festlegeprofil (1) nach einem der vorangehenden Ansprüche, **dadurch gekennzeichnet, dass** dieses ein- oder mehrstückig ausgebildet ist.

8. Festlegeprofil (1) nach einem der vorangehenden Ansprüche, **dadurch gekennzeichnet, dass** dieses in einem Extrusionsverfahren, bevorzugt in einem Coextrusionsverfahren unter Anordnung des Leuchtdiodenbands (13) am Festlegeprofil (1), hergestellt ist.

9. Festlegeprofil (1) nach einem der vorangehenden Ansprüche, **dadurch gekennzeichnet, dass** dieses ein Polymermaterial enthält oder aus einem solchen besteht, wobei des Polymermaterial ein Polyolefin, wie beispielsweise ein Polyethylen oder ein Polypropylen oder ein Polybutylen, oder ein Polyamid oder ein Polystyrol oder ein ABS (Acrylnitril-Butadien-Styrol) oder ein Polyester oder ein Polycarbonat oder ein Polyvinylchlorid (PVC) oder ein PEEK (Polyetheretherketon) oder ein PEI (Polyetherimid) oder ein SAN (Styrol-Acrylnitril-Copolymer) oder ein POM (Polyoxymethylen) oder ein ASA (Acrylnitril-Styrol-Acrylaester-Copolymer)oder ein Blend oder eine Mischung oder ein Copolymeres der Vorgenannten ist.

10. Festlegeprofil (1) nach einem der Ansprüche 1 bis 9, wobei vom Halteabschnitt (2) ein Abschnitt (15) eines Lichtabstrahlkörpers (14) aufgenommen ist.
